(19) **Europäisches Patentamt**
**European Patent Office**
**Office européen des brevets**

(11) **EP 2 065 223 B1**

(12) **EUROPEAN PATENT SPECIFICATION**

(45) Date of publication and mention
of the grant of the patent:
**20.10.2010 Bulletin 2010/42**

(51) Int Cl.:
***B60C 9/00*** *(2006.01)*

(21) Application number: **08019425.1**

(22) Date of filing: **06.11.2008**

(54) **Pneumatic radial tire**

Radialluftreifen

Pneu radial pneumatique

(84) Designated Contracting States:
**DE FR**

(30) Priority: **30.11.2007 JP 2007311272**

(43) Date of publication of application:
**03.06.2009 Bulletin 2009/23**

(73) Proprietor: **The Yokohama Rubber Co., Ltd.**
**Minato-ku**
**Tokyo 105-8685 (JP)**

(72) Inventors:
• **Ozaki, Makoto**
**Hiratsuka-shi**
**Kanagawa 254-8601 (JP)**

• **Harikae, Shinya**
**Hiratsuka-shi**
**Kanagawa 254-8601 (JP)**

(74) Representative: **HOFFMANN EITLE**
**Patent- und Rechtsanwälte**
**Arabellastrasse 4**
**81925 München (DE)**

(56) References cited:
**JP-A- 5 294 117      JP-A- 5 338 404**
**JP-A- 11 227 427      JP-A- 2006 264 666**
**US-A1- 2007 181 238**

**Description**

FIELD OF THE INVENTION

The present invention relates to a pneumatic radial tire, and particularly to a pneumatic radial tire which has improved high-speed durability and flat spot resistance in a well-balanced manner.

DESCRIPTION OF THE RELATED ART

Recently, there has been a demand for high-performance tires which meet a larger horsepower and a higher load capability. High-performance pneumatic radial tires designed to satisfy such demand use two-plied carcass layer made of rayon fibers for securing high-speed driving stability and high-speed durability. However, increase in weight is a problem with tire which has the two-plied rayon carcass layer.

As measures to reduce the weight of a tire while maintaining the high-speed durability and driving stability thereof, a hybrid fiber cord obtained by twisting together highly-elastic fibers such as aramid fibers and low-elastic fibers such as general-purpose nylon fibers is used as a cord of the carcass layer. By this measure, the foregoing problem has been largely solved (see Japanese Patent Application _Kokai_ Publications No. Hei. 5-294117, No. Hei. 5-338404, and No. Hei. 6-16005). Document JP-A-2006-264666 discloses the features of the preamble of claim 1.

However, the use of the general-purpose nylon fibers exemplified by nylon 66, nylon 6 and the like makes tires apt to invite another problem termed as a "flat spot phenomenon." The general-purpose nylon fiber in a tire has characteristics that deformation caused by a high heat generated during a high-speed run is set into the fiber after a stop. This causes flat spot in the tire and results in vibration of the tire in the next run.

SUMMARY OF THE INVENTION

An object of the present invention is to solve the latter mentioned problem by providing a pneumatic radial tire having improved high-speed durability and flat spot resistance in a well-balanced manner.

The pneumatic radial tire according to the present invention is designed to achieve the above objective, and includes: a carcass layer laid between paired left and light bead parts; multiple plurality of belt layers arranged in an outer periphery of the carcass layer in a tread part, an extending direction of cords in each of the belt layers intersecting that of cords in another one of the belt layers; and a belt cover layer arranged by helically winding, in a tire circumferential direction, an organic fiber cord around the entire outer periphery and/or in the two end areas of the belt layers. The pneumatic radial tire is **characterized in that**: the carcass layer is constituted of a hybrid fiber cord obtained by imparting a first twist to each of a nylon 46 fiber yarn and two aramid yarns, and subsequently by twisting the nylon 46 fiber yarn and the two aramid fiber yarns together while imparting a second twist thereto in a direction reverse to a direction of the first twist; and a second twist coefficient K is set at 1700 to 2700, the coefficient K being expressed with an equation:

$$K = T \times D^{1/2},$$

where T denotes the number of second twists (twist/10 cm) of the hybrid fiber cord, and D denotes the total fineness (dtex) of the hybrid fiber cord.

It is desirable that the pneumatic radial tire according to the present invention is configured in such a way as to satisfy any one of the following conditions (1) to (4).

(1) The carcass layer is configured with a single-plied structure.
(2) A permanent tensile deformation of a sample taken from a coating rubber coating the carcass layer after curing has a permanent tensile deformation of not more than 3.0%.
(3) The ratio Kn/Ka of a first twist coefficient Kn of the nylon 46 fiber yarn to a first twist coefficient Ka of the aramid fiber yarn is set at 0.60 to 0.92. In this respect, the coefficients Kn and Ka are expressed with the following equations

$$Kn = Tn \times Dn^{1/2};$$

and

$$Ka = Ta \times Da^{1/2},$$

where Tn and Ta denote the numbers of first twists (twists/10 cm) of the fiber yarn; Dn and Da denotes the fineness (dtex) of the fiber yarn.

(4) The belt cover layer is constituted of a hybrid fiber cord obtained by imparting a first twist to the single nylon 46 fiber yarn and the two aramid fiber yarns in the same direction, and subsequently by twisting these fiber yarns together while imparting a second twist thereto in a direction reverse to the direction of the first twist.

According to the present invention, the cord constituting the carcass layer is formed of the hybrid fiber cord obtained by imparting the first twist to the single nylon 46 fiber yarn and the two aramid fiber yarns, and subsequently by twisting these fiber yarns together while imparting the fiber yarns in the direction reverse to the direction of the first twist, and the second twist coefficient K is set at 1700 or more. Thus, the pneumatic radial tire has high-level of high-speed durability. In addition, in the present invention, the nylon 46 fiber yarn constituting the hybrid fiber cord has a higher glass transition point, and has a better resistance to deformation caused by high heat to be set into the tire. Also in the present invention, the second twist coefficient K of the hybrid fiber cord is set at 2700 or less. Thus the pneumatic radial tire according to the invention has improved recovery characteristic from deformation after a high-speed run, thus having an enhanced flat spot resistance.

BRIEF DESCRIPTION OF THE DRAWINGS

Fig. 1 is a cross-sectional view showing a pneumatic radial tire according to an embodiment of the present invention.
Fig. 2 is a cross-sectional view showing a structure of a hybrid fiber cord constituting a carcass layer according to the embodiment of the present invention.
Figs. 3A and 3B are cross-sectional views showing structures of a hybrid fiber cords constituting a belt cover layer according to the embodiment of the present invention, respectively.

DETAILED DESCRIPTION OF THE PREFERRED EMBODIMENT

Detailed descriptions will be provided hereinbelow for a constitution of the present invention by referring to the attached drawings.

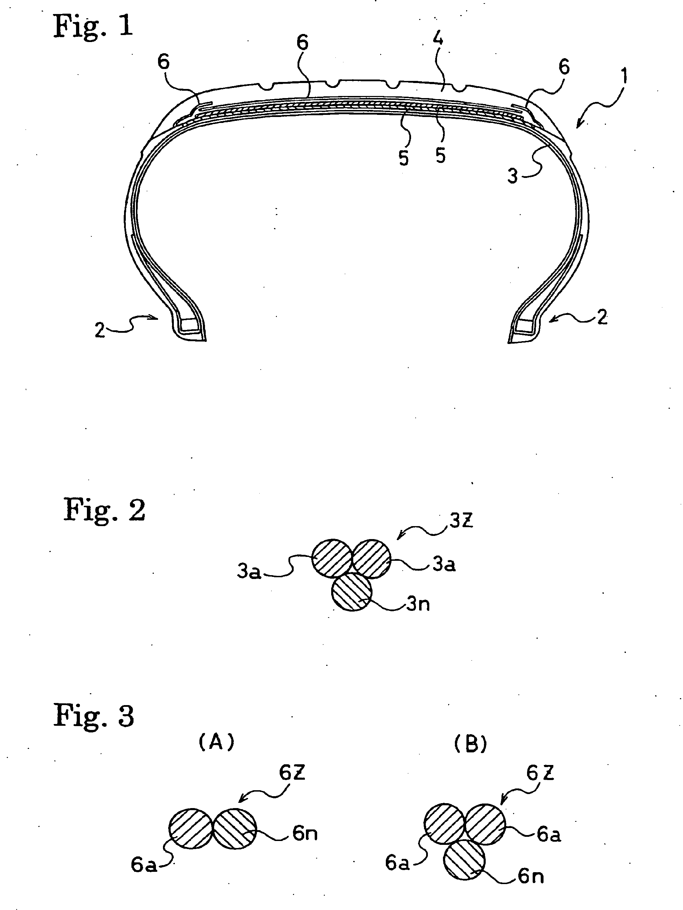

Fig. 1 is a cross-sectional view showing a pneumatic radial tire according to an embodiment of the present invention. Fig. 2 is a cross-sectional view showing a carcass cord according to the embodiment of the present invention.

As shown in Fig. 1, a pneumatic radial tire 1 includes: a carcass layer 3 laid between paired left and right bead parts 2, 2; multiple belt layers (two belt layers in Fig. 1) 5, 5 arranged in a portion in an outer periphery of the carcass layer 3 overlapping a tread part 4, a cord of the belt layers extending in a direction intersecting with the next belt layer; and a belt cover layer 6 arranged in an entire outer periphery and two end areas of the belt layers 5, 5 by helically winding an organic fiber cord around the entire outer periphery and two end areas thereof in the tire circumferential direction.

In addition, as shown in Fig. 2, the carcass layer 3 is constituted of a hybrid fiber cord 3z obtained: by imparting a first twist to a single nylon 46 fiber yarn 3n, and imparting a first twist to two aramid fiber yarns 3a, 3a in the same direction as the first twist of the single nylon 46 fiber yarn 3n; and subsequently imparting a second twist to the fiber yarns 3n, 3a, 3a in a direction reverse to the direction of the first twist. In addition, the second twist coefficient K of the hybrid fiber cord 3z is set at 1700 to 2700, more desirably set at 2400 to 2700. The second twist coefficient K is expressed with an equation:

$$K = T \times D^{1/2},$$

where T denotes the number of second twists (twists/10 cm) of the hybrid fiber cord 3z, and D denotes the fineness (dtex) of the hybrid fiber cord 3z.

In the present invention, the cord constituting the carcass layer 3 is formed of the hybrid fiber cord 3z obtained by imparting the first twist to the single nylon 46 fiber yarn 3n and to the two aramid fiber yarn 3a, 3a, and subsequently by twisting the fiber yarns 3n, 3a, 3a together while the fiber yarns 3n, 3a, 3a are imparted to the second twist in the direction reverse to the direction of the first twist. Meanwhile, the second twist coefficient K of the hybrid fiber cord 3z is set at 1700 and more. Thus, the pneumatic radial tire of present invention has a high-level high-speed durability.

Also in the present invention, the nylon 46 fiber yarn 3n constituting the hybrid fiber cord 3z has a higher glass transition point, thus having a better resistance to deformation caused by high heat from being set into the nylon 46 fiber yarn 3n. Meanwhile, the second twist coefficient K of the hybrid fiber cord is set at 2700 or less. Thus, the pneumatic radial tire of present invention has an improved recovery characteristic which makes the hybrid fiber cord 3z recover from deformation after a high-speed run, and has an enhanced flat spot resistance.

Moreover, in the present invention, the application of the hybrid fiber cord 3z to the carcass layer 3 makes it possible for the tire to secure a physical strength which is equal to or more than that of a conventional two-plied carcass layer made of a rayon fiber cord while forming the carcass layer 3 with the single-plied structure. Accordingly, the pneumatic radial tire of the present invention has a reduced weight.

In the present invention, it is desirable to control the tensile strength of the hybrid fiber cord 3z so as to be 8cN or more, more desirably 10cN or more. As a result, the high-speed durability of the tire is secured at a higher level. When the second twist coefficient K of the hybrid fiber cord 3z is less than 1700, the fatigue resistance of the hybrid fiber cord 3z becomes lower. This makes it difficult for the pneumatic radial tire to secure its durability. On the other hand, when the second twist coefficient K of the hybrid fiber cord 3z is more than 2700, the resistance which makes the hybrid fiber cord 3z recover from deformation becomes lower. This makes it difficult for the pneumatic radial tire to secure its flat spot resistance.

In the pneumatic radial tire 1 according to the present invention, from a viewpoint of reducing the weight of the tire 1, it is desirable that the number of plies constituting the carcass layer 3 should be one. However, a multiple-plied carcass layer may be arranged in the tire depending on the type and the purpose of the tire. When the multiple-plied carcass layer is arranged in the tire, the hybrid fiber cord 3z according to the present invention may be applied to at least one of the multiple plies constituting the carcass layer.

In the present invention, it is desirable that a permanent tensile deformation of a sample taken from a coating rubber of the tire coating the carcass layer after curing is controlled so as to be 3.0% or less of the original length of the sampled piece, more desirably 2.0% or less. As a result the flat spot resistance of the pneumatic radial tire is increased to a higher level.

It is desirable that one or more rubbers selected from a group consisting of NB (natural rubber), SBR (styrene butadiene rubber), BR (butadiene rubber) and IR (isoprene rubber) is used as the coating rubber coating the carcass layer 3. In addition, a rubber obtained by modifying terminals of any one of these rubbers by functional groups containing an atom such as a nitrogen atom, an oxygen atom, a fluorine atom, a chlorine atom, a silicon atom, a phosphorus atom or a sulfur atom, or by epoxy may be used as the coating rubber with which the carcass layer 3 is coated. Examples of the functional groups include amine, amide, hydroxyl, ester, ketone, siloxy and alkylsilyl.

Into any one of these rubbers, it is desirable to blend carbon black satisfying the following conditions: the adsorption of iodine on carbon black being 20 g/kg to 100 g/kg, more desirably 20 g/kg to 50 g/kg; the amount of DBP (di-butyl phthalate) absorbed by black carbon being $50 \times 10^{-5}$ m$^3$/kg to $135 \times 10^{-5}$ m$^3$/kg, more desirably $50 \times 10^{-5}$ m$^3$/kg to $100 \times 10^{-5}$ m$^3$/kg; the CTAB (cetyl tri-methyl ammonium bromide) specific surface area of carbon black being $30 \times 10^3$ m$^2$/kg to $90 \times 10^3$ m$^2$/kg, more desirably $30 \times 10^3$ m$^2$/kg to $45 \times 10^3$ m$^2$/kg

Furthermore, it is desirable that the amount of sulfur used in any one of these rubbers should be 1.5 to 4.0 parts, more desirably 2. 0 to 3.0 parts, by weight per 100 parts by weight of the rubber.

The permanent tensile deformation is expressed with

$$[(L1-L0)/L0] \times 100\%$$

where L0 denotes the length of a rubber piece sampled out from a tire after curing, and L1 denotes the length of a rubber piece obtained by: applying tensile deformation, by 25% of its original length, to the sampled rubber piece with the length L0; subsequently leaving the rubber piece thus deformed in an atmosphere of 70°C for one hour; thereafter leaving the resultant rubber piece in an atmosphere of 25°C for 22 hours; after that, releasing the rubber piece from the deformation; and then leaving the thus-released rubber piece in an atmosphere of 25°C for one hour. Here, it is desirable to set the length L0 of the rubber piece to approximately 100 mm.

Moreover, in the present invention, it is desirable that, in the hybrid fiber cord 3z, the ratio Kn/Ka of a first twist coefficient Kn of the nylon 46 fiber yarn 3n to a first twist coefficient Ka of the aramid fiber yarn 3a is controlled so that the ratio Kn/Ka can be set at 0. 60 t0 0.92, more desirably at 0.70 to 0.81. Here, the coefficient Kn and the coefficient Ka are expressed with the following equations:

$$Kn = Tn \times Dn^{1/2};$$

and

$$Ka = Ta \times Da^{1/2},$$

where Tn and Ta denote the number of first twists (twists/10 cm) of the fiber yarns, respectively; Dn and Da denote the fineness (dtex) of the fiber yarns, respectively.

By controlling the ratio Kn/Ka in this manner, the tire according to present invention has improved high-speed durability and flat spot resistance in a well-balanced manner. If the ratio Kn/Ka is less than 0. 60, the durability of the hybrid fiber cord 3z becomes lower, making it difficult for the tire to secure its high-speed durability. On the other hand, if the ratio Kn/Ka is more than 0. 92, the durability of the hybrid fiber cord 3z becomes lower. This makes it difficult for the pneumatic radial tire to secure its high-speed durability and obtain an effect of enhancing the flat spot resistance fully.

In the case of the embodiment shown in Fig. 1, the belt cover layer 6 is arranged in the entire outer periphery of the belt layers 5, 5 and in the two end areas of the belt layers 5, 5. Nevertheless, the arrangement of the belt cover layer 6 is not limited to this case. The belt cover layer 6 may be arranged only in the entire outer periphery of the belt layers 5, 5, or only in the two end areas of the belt layers 5, 5. Otherwise, the belt cover layer 6 may be arranged by dividing the belt cover layer 6 into multiple blocks in the tire width direction.

In the present invention, it is more desirable that, as shown in Figs. 3A and 3B, the belt cover layer 6 arranged in a portion in the outer periphery of the carcass layer 3 and overlapping the tread part 4 is constituted of a hybrid fiber cord 6z obtained by: imparting a first twist to a single nylon 46 fiber yarn 6n, imparting a first twist to one or two aramid fiber yarns 6a, 6a in the same direction as the first twist of the single nylon 46 fiber yarn 6n; and subsequently twisting together the thus-twisted single nylon 46 fiber yarn 6n and the thus-twisted one or two aramid fiber yarns 6a, 6a in a direction reverse to the direction in which the first twist of the single nylon 46 fiber yarn 6n and the one or two aramid fiber yarns 6a, 6a.

In such belt cover layer 6, the recovery characteristic of the hybrid fiber cord 6z is improved by the nylon 46 therein which has a higher glass transition point. For this reason, the flat spot resistance of the tire is further improved. In other words, when general-purpose nylon 66 or nylon 6 is used as low-elastic fibers constituting the hybrid fiber cord 6z, the recovery characteristic of the hybrid fiber cord 6z is reduced because of the lower glass transition point of nylon 66 or nylon 6, and accordingly raises a problem that the flat spot phenomenon cannot be checked. In contrast, this problem can be solved by using nylon 46.

In the pneumatic radial tire 1 according to the present invention, as described above, the carcass layer 3 is constituted of the hybrid fiber cord 3z obtained by imparting the first twist, in the same direction as the carcass layer 3, to the single nylon 46 fiber yarn 3n with the higher glass transition point and the two highly-elastic aramid yarns 3a, 3a, and subsequently by twisting the fiber yarns 3n, 3a, 3a together while imparting the second twist to the fiber yarns 3n, 3a, 3a in the direction reverse to the direction which the first twist. In addition, the second twist coefficient K of this hybrid fiber cord 3z is controlled so as to be in the predetermined range. By these schemes, the present invention aims at improving the high-speed durability and flat spot resistance of the pneumatic radial tire in a well-balanced manner. For this reason, the present invention is applicable to tires, particularly to low-profile pneumatic radial tires, installed on recent high-performance automobiles.

Examples

Conventional Examples 1 to 2, Examples 1 to 3, Comparative Examples 1 to 3

Conventional tires (Conventional Examples 1 to 2), tires according to the present invention (Examples 1 to 3) and comparative tires (Comparative Examples 1 to 3) were produced, each of the tires having the tire size of 225/45R17 94Y and tire structure shown in Fig. 1. Here, the number of carcass cords and the specification of the hybrid fiber cord of each of the tires were produced so as to be different from one tire to another as shown in Table 1. Note that the permanent tensile deformation of the carcass coating rubber and the materials for the belt cover layer were common among all the tires.

In the rows respectively for the configuration of the hybrid fiber cord and the belt cover layer in Table 1: reference numeral 2R denotes an organic fiber cord obtained by imparting a first twist to two rayon fiber yarns each with a fineness of 1840 dtex, and subsequently by twisting the two twisted rayon fiber yarns together while imparting a second twist to the rayon fiber yarns in a direction reverse to a direction of the first twist imparted to the two rayon fiber yarns; reference numeral A+N66 denotes an hybrid fiber cord obtained by imparting a first twist to a single aramid fiber yarn with a fineness of 1670 dtex and a single nylon 66 fiber yarns with a fineness of 1400 dtex, and subsequently by twisting the twisted aramid fiber yarn and the twisted nylon 66 fiber yarn together while imparting a second twist to the two fiber yarns in a direction reverse to a direction of the first twist imparted to the two fiber yarns; reference numeral 2A+N46 denotes a hybrid fiber cord obtained by imparting a first twist to two aramid fiber yarns each with a fineness of 1670 dtex and a single nylon 46 fiber yarn with a fineness of 1400 dtex, and subsequently by twisting the two twisted aramid fiber yarns and the twisted nylon 46 fiber yarn together while imparting a second twist to the three fiber yarns in a direction reverse to a direction of the first twist imparted to the three fiber yarns; reference numeral A+N46 denotes a hybrid fiber yarn obtained by imparting a first twist to a single aramid fiber yarn with a fineness of 1670 dtex and a single nylon 46 fiber yarn with a fineness of 1400 dtex, and subsequently by twisting the twisted aramid fiber yarn and the twisted nylon 46 fiber yarn while imparting a second twist to the two fiber yarns in a direction reverse to a direction of the first twist imparted to the two fiber yarns; and reference numeral 2A+N66 denotes a hybrid fiber yarn obtained by imparting a first twist to two aramid fiber yarns each with a fineness of 1670 dtex and a single nylon 66 fiber yarn with a fineness of 1400 dtex, and subsequently by twisting the two twisted aramid fiber yarns and the twisted nylon 66 fiber yarn while imparting a second twist to the three fiber yarns in a direction reverse to a direction of the first twist imparted to the three fiber yarns (as same with the Examples described below).

For each of these 8 types of tires, the tire weight, the high-speed durability and the flat spot resistance were evaluated by use of the following methods. Results of the evaluations of each of the tires were indexed in comparison with results of the corresponding evaluations of Conventional Example 1 which is indexed as 100, and are included in Table 1. With regard to the tire weight, a smaller index value means that the tire was lighter in weight. With regard to the flat spot resistance, a smaller index value means a better flat spot resistance. With regard to the high-speed durability, a larger index value means a better high-speed durability.

Tire Weight

The weight of each tire was measured after curing, and was evaluated on the basis of the result of the measurement. High-speed Durability

Each type of tire was mounted on a rim with a rim size of 17 × 7.5J, and was inflated to an air pressure of 120 kPa. By use of an indoor drum test method (using a drum with a diameter of 1707 mm), each type of tire was caused to run on the drum at a speed of 80 km/h with a load of 9. 6 kN being applied to the tire until the tire was broken. The distance run until the tire was broken was measured for each of the tires. Each tire was evaluated on the basis of the result of the measurement. Flat Spot Resistance

Each type of tire was mounted on a rim with a rim size of 17×7.5J, and was inflated to an air pressure of 230 kPa. By use of an indoor drum test method (using a drum with a diameter of 1707 mm), the uniformity (RFV) of each type of tire was measured in accordance with JASO (Japan Automobile Standards Organization) C607. In addition, each type of tire was caused to preliminarily run on the drum at a speed of 150 km/h for 30 minutes and subsequently left with a load (5.0 kN) being applied onto the tire for one hour after the drum was stopped. After that, the uniformity (RFV) of each type of tire was measured again. For each type of tire, the difference between the uniformity measured before the preliminary run and the uniformity measured after the preliminary run was used as an evaluation index. Each type of tire was evaluated on the basis of the result.

Table 1

| | | CONVENTIONAL EXAMPLE 1 | CONVENTIONAL EXAMPLE 2 | COMPARATIVE EXAMPLE 1 | EXAMPLE 1 | EXAMPLE 2 | EXAMPLE 3 | COMPARATIVE EXAMPLE 2 | COMPARATIVE EXAMPLE 3 |
|---|---|---|---|---|---|---|---|---|---|
| NUMBER OF CARCASS LAYERS | | 2 | 1 | 1 | 1 | 1 | 1 | 1 | 1 |
| HYBRID FIBER CORD | CONSTITUTION | 2R | A + N66 | 2A + N46 | 2A + N46 | 2A + N46 | 2A + N46 | 2A + N46 | A + N46 |
| | NUMBER OF FIRST TWISTS OF ARAMID FIBERS (TWISTS PER 10 CM) | - | 44 | 22 | 25 | 35 | 39 | 45 | 44 |
| | NUMBER OF FIRST TWISTS OF NYLON FIBERS (TWISTS PER 10 CM) | - | 44 | 22 | 25 | 35 | 39 | 45 | 44 |
| | RATIO BETWEEN FIRST TWIST COEFFICIENTS $K_n/K_a$ | - | 0.92 | 0.92 | 0.92 | 0.92 | 0.92 | 0.92 | 0.92 |
| | NUMBER OF SECOND TWISTS (TWISTS PER 10 CM) | 47 | 35 | 22 | 25 | 35 | 39 | 45 | 44 |
| | SECOND TWIST COEFFICIENT K | 2850 | 2410 | 1514 | 1721 | 2410 | 2685 | 3096 | 2410 |

EP 2 065 223 B1

| | | CONVENTIONAL EXAMPLE 1 | CONVENTIONAL EXAMPLE 2 | COMPARATIVE EXAMPLE 1 | EXAMPLE 1 | EXAMPLE 2 | EXAMPLE 3 | COMPARATIVE EXAMPLE 2 | COMPARATIVE EXAMPLE 3 |
|---|---|---|---|---|---|---|---|---|---|
| PERMANENT TENSILE DEFORMATION OF CARCASS COATING RUBBER (%) | | 5.0 | 5.0 | 5.0 | 5.0 | 5.0 | 5.0 | 5.0 | 5.0 |
| BELT COVER LAYER | | 2A + N66 | 2A + N66 | 2A + N66 | 2A + N66 | 2A + N66 | 2A + N66 | 2A + N66 | 2A + N66 |
| EVALUATION | TIRE WEIGHT | 100 | 91 | 94 | 94 | 94 | 94 | 94 | 91 |
| | HIGH-SPEED DURABILITY | 100 | 85 | 95 | 103 | 105 | 108 | 95 | 85 |
| | FLAT SPOT RESISTANCE | 100 | 103 | 85 | 86 | 88 | 90 | 95 | 95 |

It is learned from Table 1 that the tires according to the present invention has improved high-speed durability and flat spot resistance in a well-balanced manner than those of the conventional types of tires and the comparative tires. Examples 4 to 7

Tires according to the present invention (Examples 4 to 7) were produced, each of the tires having a tire size of 225/45R17 94Y and tire structure shown in Fig. 1. Here, the specifications of the hybrid fiber cord of each of the tires were produced so as to be different from one tire to another as shown in Table 1. Note that the number of carcass layers, the permanent tensile deformation of the carcass coating rubber and the materials for the belt cover layer were common among all the tires.

For each of these 4 types of tires, the tire weight, the high-speed durability and the flat spot resistance were evaluated by use of methods which were described above. Results of the evaluations of each tire were indexed in comparison with results of the corresponding evaluations of Conventional Example 1 which were indexed as 100, and are included in Table 2. Table 2 also includes the results of Example 2 for comparison.

Table 2

| | | example 2 | example 4 | example 5 | example 6 | example 7 |
|---|---|---|---|---|---|---|
| Number of carcass layers | | 1 | 1 | 1 | 1 | 1 |
| hybrid fiber cord | constitution | 2A + N46 | 2A + N46 | 2A + N46 | 2A + N46 | 2A + N46 |
| | number of first twists of aramid fibers (twists per 10 cm) | 35 | 35 | 35 | 35 | 35 |
| | number of first twists of nylon fibers (twists per 10 cm) | 35 | 35 | 20 | 30 | 45 |
| | ratio between first twist coefficients Kn/Ka | 0.92 | 0.92 | 0.52 | 0.78 | 1.18 |
| | number oF SECOND TWISTS (TWISTS PER 10 CM) | 35 | 35 | 35 | 35 | 35 |
| | second twist coefficient K | 2410 | 2410 | 2410 | 2410 | 2410 |
| permanent tensile deformation of carcass coating rubber (%) | | 5.0 | 2.0 | 2.0 | 2.0 | 2.0 |
| belt cover layer | | 2A + N66 | 2A + N66 | 2A + N66 | 2A + N66 | 2A + N66 |
| evaluation | tire weight | 94 | 94 | 94 | 94 | 94 |
| | high-speed durability | 105 | 105 | 103 | 110 | 103 |
| | flat spot resistance | 88 | 81 | 77 | 79 | 85 |

It is learned from Table 2 that Examples 4 and 6 had improved high-speed durability compared to Examples 5 and 7 because, like the first twist coefficient of Example 2, the first twist coefficients Kn/Ka respectively of Examples 4 and 6 were in the range of 0.60 to 0.92. It is also learned from Table 2 that Examples 4 to 7 had improved flat spot resistance compared to Example 2 because the permanent tensile deformation of the carcass coating rubber of each of Example 4 to 7 was smaller than that of Example 2.

Example 8

A tire according to the present invention (Example 8) was produced, the tire having the tire size of 225/45R17 94Y and the tire structure shown in Fig. 1. Here, the material for the belt cover layer of Example 8 was made different from that of Example 6 as shown in Fig. 3.

The tire weight, high-speed durability and flat spot resistance of Example 8 was evaluated by use of the respective methods which described above. Results of the evaluations of Example 8 were indexed in comparison with the results of the corresponding evaluations of Conventional Example 1 which were indexed as 100, and were included in Table 3. Table 3 includes the results of the evaluations of Example 6 for comparison.

Table 3

|  |  | example 6 | example 8 |
|---|---|---|---|
| Number of carcass layers |  | 1 | 1 |
| hybrid fiber cord | constitution | 2A + N46 | 2A + N46 |
|  | number of first twists of aramid fibers (twists per 10 cm) | 35 | 35 |
|  | number of first twists of nylon fibers (twists per 10 cm) | 30 | 30 |
|  | ratio between first twist coefficients Kn/Ka | 0.78 | 0.78 |
|  | number oF SECOND TWISTS (TWISTS PER 10 CM) second twist coefficient K | 35 2410 | 35 2410 |
| permanent tensile deformation of carcass coating rubber (%) |  | 2.0 | 2.0 |
| belt cover layer |  | 2A + N66 | 2A + N46 |
| evaluation | tire weight | 94 | 94 |
|  | high-speed durability | 110 | 110 |
|  | flat spot resistance | 79 | 70 |

It is learned from Table 3 that Example 8 had improved flat spot resistance than Example 6 because, instead of nylon 66, nylon 46 was used as one of the materials for the belt cover layer.

**Claims**

1.   A pneumatic radial tire comprising:

a carcass layer (3) laid between paired left and right bead parts (2,2):

a plurality of belt layers (5) arranged in an outer periphery of the carcass layer (3) in a tread part (4), an extending direction of cords in each of the belt layers (5) intersecting that of cords in another one of the belt layers (5); and
a belt cover layer (6) arranged by helically winding, in a tire circumferential direction, an organic fiber cord around the entire outer periphery and/or in the two end areas of the belt layers (5), **characterised in that** the carcass layer (3) is constituted of a hybrid fiber cord (3z) obtained by imparting a first twist to a single nylon 46 fiber yarn (3n) and two aramid fiber yarns (3a,3a), and subsequently by twisting together the three fiber yarns while imparting a second twist thereto in a direction reverse to a direction of the first twist, and a second twist coefficient K of the hybrid fiber cord (3z) is set at 1700 to 2700, the coefficient K being expressed with an equation:

$$K = T \times D^{1/2},$$

where T denotes the number of second twists (twists/10 cm) of the hybrid fiber cord (3z), and D denotes the total fineness (dtex).

2.   The pneumatic radial tire according to claim 1, wherein the carcass layer has a single-ply structure.

3.   The pneumatic radial tire according to any one of claims 1 and 2, wherein a sample taken from a coating rubber coating the carcass layer after curing has a permanent tensile deformation of not more than 3.0%.

4.   The pneumatic radial tire according to any one of claims 1 to 3, wherein a ratio Kn/Ka of a first twist coefficient Kn of the nylon 46 fiber yarn to a first twist coefficient Ka of the aramid fiber yarn is set at 0.60 to 0.92, the coefficients Kn and Ka being expressed with the following equations:

$$Kn = Tn \times Dn^{1/2};$$

and

$$Ka = Ta \times Da^{1/2},$$

where Tn denotes the number of first twists (twists/10 cm) of the nylon 46 fiber yarn; Dn denotes the fineness (dtex) of the nylon 46 fiber yarn; Ta denotes the number of first twists (twists/10 cm) of the aramid fiber yarn; and Da denotes the fineness (dtex) of the aramid fiber yarn.

5. The pneumatic radial tire according to any one of claims 1 to 4, wherein the belt cover layer is constituted of a hybrid fiber cord obtained by imparting a first twist to a nylon 46 fiber yarn and an aramid fiber yarn in the same direction, and subsequently by twisting together the two fiber yarns while imparting a second twist thereto in a direction reverse to the direction of the first twist.

**Patentansprüche**

1. Radialer pneumatischer Reifen, der umfasst:

eine Karkassenschicht (3), die zwischen einem Paar aus linken und rechten Wulstteilen (2, 2) angeordnet ist; eine Mehrzahl von Gürtelschichten (5), die in einem Außenumfang der Karkassenschicht (3) in einem Laufflächenteil (4) angeordnet sind, wobei eine Erstreckungsrichtung von Korden in jeder der Gürtelschichten (5) jene von Korden in einer anderen der Gürtelschichten (5) schneidet; und eine Gürtelabdeckschicht (6), die durch spiralförmiges Wickeln in der Reifenumfangsrichtung eines Kords aus organischen Fasern um den gesamten Außenumfang und/oder in den zwei Endbereichen der Gürtelschichten (5) angeordnet ist, **dadurch gekennzeichnet, dass** die Karkassenschicht (3) aus einem Hybridfaserkord (3z), der durch Vermitteln einer ersten Verdrillung an ein einziges Nylon-46-Fasergarn (3n) und zwei Aramidfasergarnen (3a, 3a) und danach durch Zusammenverdrillen der drei Fasergarne erhalten wird, wobei diesen eine zweite Verdrillung in der zur Richtung der ersten Verdrillung umgekehrten Richtung vermittelt wird, und ein zweiter Verdrillungskoeffizient K des Hybridfaserkords (3z) auf 1,700 bis 2,700 festgelegt ist, wobei der Koeffizient K mit einer Gleichung

$$K = T \times D^{1/2}$$

ausgedrückt wird, wobei T die Anzahl der zweiten Verdrillungen (Verdrillungen/10 cm) des Hybridfaserkords (3z) bezeichnet und D die Gesamtfeinheit (dtex) bezeichnet.

2. Radialer pneumatischer Reifen nach Anspruch 1, bei dem die Karkassenschicht eine einlagige Struktur aufweist.

3. Radialer pneumatischer Reifen nach Anspruch 1 oder 2, bei dem eine Probe, die aus einer Gummibeschichtung der Karkassenschicht nach dem Vulkanisieren genommen wird, eine permanente Zugverformung von nicht mehr als 3,0% aufweist.

4. Radialer pneumatischer Reifen nach einem der Ansprüche 1 bis 3, bei dem ein Verhältnis Kn/Ka eines ersten Verdrillungskoeffizienten Kn des Nylon-46-Fasergarns zu einem ersten Verdrillungskoeffizienten Ka des Aramidfasergarns auf 0,60 bis 0,92 festgelegt ist, wobei die Koeffizienten Kn und Ka mit den folgenden Gleichungen ausgedrückt werden:

$$Kn = Tn \times Dn^{1/2};$$

und

$$Ka = Ta \times Da^{1/2},$$

wobei Tn die Anzahl der ersten Verdrillungen (Verdrillungen/10 cm) des Nylon-46-Fasergarns bezeichnet; Dn die Feinheit (dtex) des Nylon-46-Fasergarns bezeichnet; Ta die Anzahl der ersten Verdrillungen (Verdrillungen/10 cm) des Aramidfasergarns bezeichnet; und Da die Feinheit (dtex) des Aramidfasergarns bezeichnet.

**5.** Radialer pneumatischer Reifen nach einem der Ansprüche 1 bis 4, bei dem die Gürtelabdeckschicht aus einem Hybridfaserkord aufgebaut ist, der durch Vermitteln einer ersten Verdrillung an ein Nylon-46-Fasergarn und ein Aramidfasergarn in derselben Richtung und danach durch Zusammenverdrillen der zwei Fasergarne erhalten wird, wobei diesen eine zweite Verdrillung in der zur ersten Richtung umgekehrten Richtung vermittelt wird.

**Revendications**

**1.** Bandage radial pneumatique comprenant:

une couche de carcasse (3) placée entre des parties de talon gauche et droite appariées (2, 2);
une pluralité de couches de ceinture (5) agencées dans une périphérie extérieure de la couche de carcasse (3) dans une partie de bande de roulement (4), une direction d'extension de cordes dans chacune des couches de ceinture (5) se croisant avec celles de cordes dans une autre des couches de ceinture (5); et
une couche de recouvrement de ceinture (6) agencée en enroulant hélocïdalement, dans une direction circonférentielle du bandage, une corde en fibres organiques autour de toute la périphérie extérieure et/ou dans les deux zones d'extrémité des couches de ceinture (5), **caractérisé en ce que**
la couche de carcasse (3) est constituée par une corde de fibres hybrides (3z) obtenue en impartant une première torsion à un seul fil de fibres en nylon 46 (3n) et deux fils de fibres d'aramide (3a, 3a), et en tordant ensuite ensemble les trois fils de fibres tout en conférant une deuxième torsion à ceux-ci dans une direction inverse à la direction de la première torsion, et
un deuxième coefficient de torsion K de la corde en fibres hybrides (3z) est établi à 1700 jusqu'à 2700, le coefficient K étant exprimé par une équation:

$$K = T \times D^{1/2},$$

où T indique le nombre de deuxièmes torsions (torsions/10 cm) de la corde en fibres hybrides (3z), et D indique la finesse totale (dtex).

**2.** Bandage radial pneumatique selon la revendication 1, dans lequel la couche de carcasse possède une structure à une seule couche.

**3.** Bandage radial pneumatique selon l'une quelconque des revendications 1 et 2, dans lequel un échantillon prélevé d'un caoutchouc de revêtement recouvrant la couche de carasse après la vulcanisation présente une déformation permanente à la traction non supérieure à 3,0%.

**4.** Bandage radial pneumatique selon l'une quelconque des revendications 1 à 3, dans lequel un rapport Kn/Ka d'un premier coefficient de torsion Kn du fil de fibres en nylon 46 à un premier coefficient de torsion Ka du fil en fibres aramide est réglé à 0,60 jusqu'à 0,92, les coefficients Kn et Ka étant exprimés par les équations suivantes:

$$Kn = Tn \times Dn^{1/2};$$

et

$$Ka = Ta \times Da^{1/2},$$

où Tn indique le nombre de premières torsions (torsions/10 cm) du fil en fibres de nylon 46; Dn indique la finesse (dtex) du fil en fibres de nylon 46; Ta indique le nombre de premières torsions (torsions/10 cm) du fil en fibres aramides; et Da indique la finesse (dtex) du fil en fibres aramides.

5.  Bandage radial pneumatique selon l'une quelconque des revendications 1 à 4, dans lequel la couche de recouvrement de ceinture est constituée d'une corde en fibres hybrides obtenue en conférant une première torsion à un fil en fibres de nylon 46 et un fil en fibres aramides dans la même direction, et en tordant ensuite ensemble les deux fils de fibres tout en conférant une deuxième torsion à ceux-ci dans une direction inverse à la direction de la première torsion.

Fig. 1

Fig. 2

Fig. 3

(A)

(B)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI5294117 B
- JP HEI5338404 B
- JP HEI616005 B
- JP 2006264666 A